# EUROPEAN PATENT SPECIFICATION

(11) **EP 2 542 840 B1**
(45) Date of publication and mention of the grant of the patent: **24.05.2017**
(21) Application number: 11708934.2
(22) Date of filing: 04.03.2011
(51) Int. Cl.: F24F 6/12, B05B 17/06

(54) **DEVICE AND METHOD FOR HUMIDIFYING AIR**
VORRICHTUNG UND VERFAHREN ZUR LUFTBEFEUCHTUNG
DISPOSITIF ET PROCÉDÉ D'HUMIDIFICATION D'AIR

(30) Priority: 04.03.2010 NL 2004339
(43) Date of publication of application: 09.01.2013
(73) Proprietor: B&B Humidification B.V., 1271 LW Huizen (NL)
(72) Inventor: BUIJS, Martinus Carolus Arie, NL-1186KL Amstelveen (NL); BAKKER, Joost Lennard, NL-3543CX Utrecht (NL)
(74) Representative: Algemeen Octrooi- en Merkenbureau B.V.
(86) International application number: PCT/NL2011/050149
(87) International publication number: WO 2011/108927

(56) References cited:
- US-A- 4 085 893
- US-A1- 2005 212 152
- US-A1- 2006 237 860
- US-B1- 6 462 314

## Description

The invention relates to a device and method for humidifying air. More specifically, the invention relates to an air humidification device comprising a number of water atomising modules placed in a water tank.

Different techniques are currently used for humidifying air. One of these techniques is the atomisation of water with the help of ultrasonic transducers. Such transducers contain thin piezoelectric elements, hereafter referred to as membranes, which vibrate at an ultrasonic frequency. The transducers are placed under water, whereby the surface of the membranes are orientated upwards and are in contact with the water.

The water level above the transducers is such that by activation of the transducers, the surface water of the water atomises. The resulting water mist can then, with the help of a ventilation system, be mixed with ventilated air.

There are known air humidification apparatuses that use ready made water atomising modules, as provided by the company Seliger in Villingen, Germany. An example of such a water atomising module is the Fogstar 600. This module consists of a metal housing with six membranes at the top side. The module has a voltage supply connection of 36 V AC (alternating current). To convert the voltage supply to a direct current for the piezoelectric elements, i.e. the membranes, an electronic circuit is present, which is arranged on a printed circuit board in a metal housing of the modules. The electronic circuit contains, amongst others, a rectifier and a capacitor. Each membrane is electrically coupled to the printed circuit board and the metal housing. The metal housing is part of the circuit controlling the membranes. This is in itself a good construction, whereby the membranes are connected to the water side without the need for additional contact leads.

To increase the capacity of said air humidifying apparatus, multiple water atomising modules are placed side by side in a water tank. Here the water atomising modules are connected to a 200 V AC power supply via a transformer. Between the transformer and each water atomising module, a relay switch is placed so that individual water atomising modules can be turned on and off. Research has shown that when using a power transformer for all atomising modules, if several multiple atomising modules are activated, a small current can run between these modules.

This is a result of the fact that the voltage on the housing of the modules differ slightly. So there is a voltage difference present between two or more modules in the same water tank. This results in the occurrence of voltage erosion. This is detrimental to the life span of the modules. Furthermore, although restricted, electrolytic gas can arise due to an electrolysis event on the surface of the metal housings of the modules. This electrolytic gas is extremely flammable and may cause an explosion. Also, it was shown that by switching off the individual switches, the rectifiers in the modules were subject to significant currents due to charging and discharging the capacitors, which limited the life span. The relay switches themselves also cause problems, because also here very large on and off switch currents were created. Often burn marks were found and sometimes the contacts of the switches were welded together due to the very high current flow, partly caused by leakage currents of the faulty atomisers, where one side of the rectifier is faulty and via the water, the necessary current for the other atomiser is involved. This problem also accelerated by voltage corrosion.A device for humidifying air according to the preamble of claim 1 is known from document US 2005/212152 A1. The aim of the present invention to provide an air humidification apparatus with a water reservoir wherein the above described multiple atomising modules are placed, and whereby the above described problems are no more, or at least have lesser degrees of severity.

This aim is achieved with a device for humidifying air according to claim 1. The use of one transformer per atomising module, in the electrical circuit, provides an electrical separation of the atomising modules. Hereby, it makes it impossible for currents to run between the modules. The voltage corrosion and the production of electrolytic gas are therefore avoided. In addition, the transformer at the primary switching serves as a safety measure to prevent an excessive switch on currents at the relay switches.

In one embodiment, the piezoelectric elements in the atomising module are powered by an AC / DC converter. The converter can convert the alternating current (AC) to the direct current (DC) required for the piezoelectric elements. In one embodiment, the AC / DC converter is arranged in the atomising modules themselves. Notably, they can also be arranged outside the modules. For example, in the power supply circuit.

In one embodiment, the power supply circuit comprises a number of switches for switching the primary circuit of individual atomising modules. Using the switches, the number of active modules are varied and therefore, so is the amount of moisture in the air.

Preferably, a switch is placed at both the supply and drain lines, to the transformer. With this, if one of the switches is faulty, the entire air humidifying device still remains functionally intact.

In a further embodiment, the device comprises one or more partitions between atomising modules placed in the water tank.

The invention also relates to a method for humidifying air according to claim 7. Further advantages and features of the present invention will become apparent by reference to a description of some embodiments, wherein reference is made to the accompanying drawings, which show:
Fig. 1 a cut-away side view of a atomising module as in one embodiment of the invention;
Fig. 2 a top view of the atomising module of Figure 1;
Fig. 3 an electrical scheme of a power supply circuit for powering the atomising modules, as used in existing systems;
Fig. 4 an electrical scheme of a power circuit and two atomising modules according to an embodiment of the invention;
Fig. 5 a side view of an air humidification device according to an embodiment of the invention;

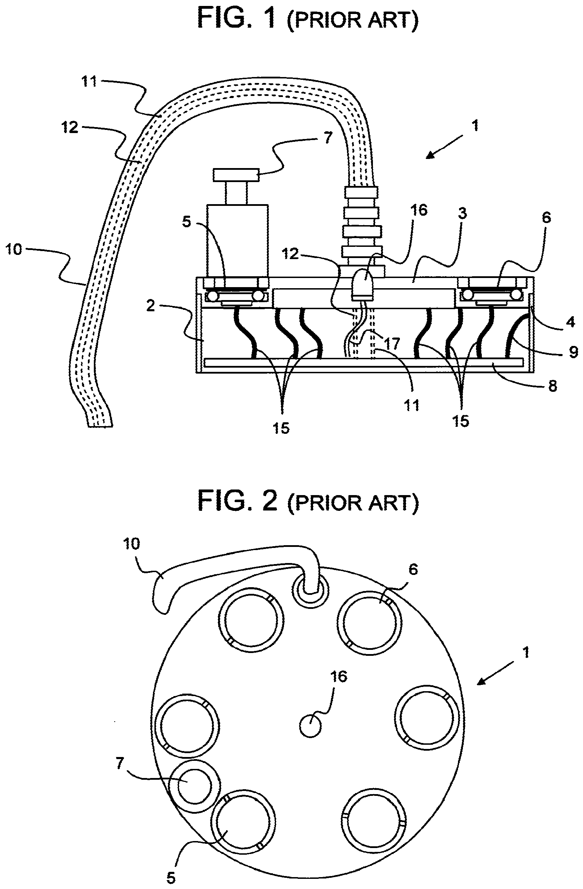

Figure 1 shows a cut-away side view of an atomising module 1 according to an embodiment of the invention. The atomising module 1 as such is known, and comprises a housing 2 which is substantially made of a metal, such as brass. In this embodiment a side wall 4 of the housing 2 is made of metal. Also a top wall 3 of the housing 2 is made of metal. In the top wall 3, a number of piezoelectric elements are mounted, with two 5,6 shown in Figure 1. The atomising module 1 also comprises a float 7 arranged at the top side of the module. Furthermore, the module 1 comprises a printed circuit board 8 with the necessary electronics to control the piezoelectric elements 5, 6. Voltage supply of the module occurs via a connecting cable 10 with two wires 11, 12 which are electrically connected to the printed circuit board 8. In the example of Figure 1, a module 1 comprises six piezoelectric elements. In this embodiment the electronics on the printed circuit board 8 comprise an AC / DC converter with a rectifier and a capacitor, which are herein not shown. Using the AC / DC converter, a voltage difference present between the wires 11 and 12, is converted to a direct voltage for the piezoelectric elements 5, 6.

A first terminal of each of the piezoelectric elements is connected to a terminal on the printed circuit board 8, via a wire. See wires 15. A second terminal of the piezoelectric elements 5, 6 is electrically connected to the top wall 3 of the metal housing 2 via a link 9 and the conductive side wall 4. Notably, the link can also be directly connected to the top wall 3. Figure 1 also shows an indicator 16 which is electrically connected via a link 17 to the printed circuit board 8. The indicator 16 serves to indicate whether the module works. In this example, the indicator 16 consists of a light emitting diode (LED) 16.

Figure 2 shows a top view of the module 1. In Figure 2, the six piezoelectric elements 5, 6 and the float 7 are shown. Also, a part of the connecting cable 10 is shown. In the middle of an atomising module the indicator 16 is shown.

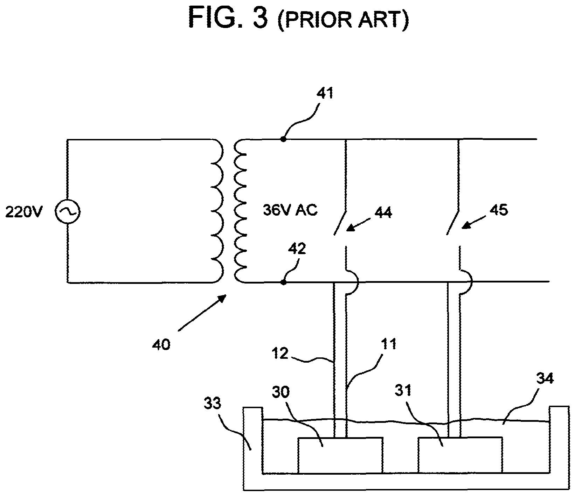

Figure 3 shows an electrical scheme of a power supply circuit for powering the atomising modules, as used in existing systems. Figure 3 further shows a cross-sectional view of two atomising modules 30, 31 connected to the power supply circuit. The atomising modules 30, 31 are placed in a water reservoir 33 which is filled with water to a certain height 34. The height is such that the piezoelectric elements of the modules 30, 31 can generate a mist at the water surface. A typical distance between the piezoelectric elements and the water surface is 45 mm.

The power supply circuit consists of, amongst others, a transformer 40 which connects to a 220 V AC power supply. The transformer 40 converts the voltage from 220 V AC, to for example a 36 V AC voltage. A first terminal 41 of the secondary winding of the transformer 40 is connected via a relay 44 to one of the two terminals of the atomising module 30. A second terminal 42 of the secondary winding of the transformer 40 is directly connected to the other terminal of the atomising module 30, see connection 12. The second atomising module 31 is in a similar way connected to the secondary winding of the transformer 40. In this case, a relay 45 is connected to the terminal 41 to activate the atomising module 31.

A humidifier with multiple atomising modules in the configuration of Figure 3 was shown to have a limited life span. Sometimes, such an apparatus had to be revised after 500 hours which was a significant cost for the purchaser and / or the supplier, depending on the delivery conditions. The applicant has conducted research into the causes of the limited life span. It was shown that in the said apparatus, different adverse effects exist, which were already named in the introduction.

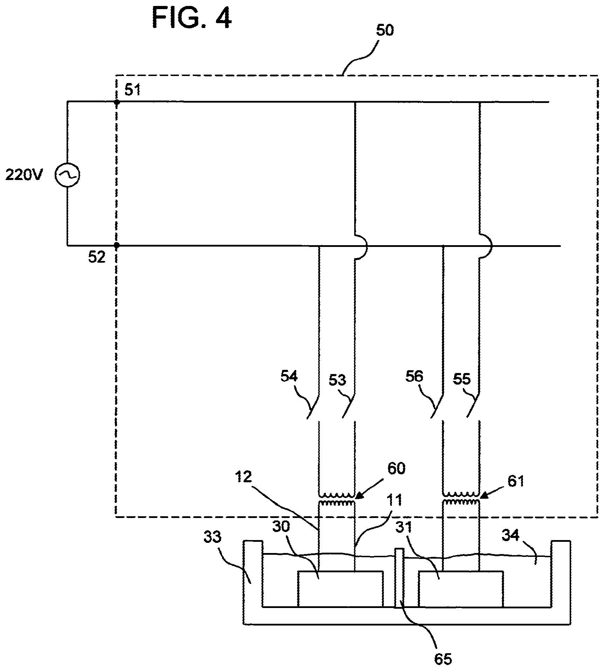

The applicant has recognized said problems and has made adjustments whereby an embodiment is shown schematically in Figure 4. Figure 4 shows an electrical scheme of a power supply circuit 50 for powering the atomising modules according to an embodiment of the invention. Figure 4 also shows a schematic cross section of two atomising modules 30, 31 connected to the power supply circuit 50. The atomising modules 30, 31 and the water reservoir are identical to those in Figure 3.

The power supply circuit 50 in this embodiment can be connected to a 220 V AC power supply to the terminals 51, 52. A separate transformer 60, 61 is arranged between the terminals 51, 52 for every atomising module 30, 31. The transformers 60, 61 convert the 220 V AC voltage into a 36 V AC voltage; other voltages are possible, as is known in the art.

In the embodiment in Figure 4, a switch, such as a relay switch, is present in both supply lines of the transformers 60, 61, see the switches 53, 54, 55, 56. Notably, instead of two switches, also one single switch per transformer is possible. The advantage of two switches is that if one of the poles is faulty, the unit operation is maintained.

The separate transformers 60, 61 ensure that the atomising modules 30, 31 are galvanically separated from each other. The currents cannot run between the atomising modules 30, 31. The leaking current between the modules 30, 31 which led to the adverse effects and the electrolysis voltage erosion in the state of the art, is no longer present in the invention. The primary switch of the transformers 60, 61 prevents large charges on the capacitors and rectifiers of the AC / DC converter, thereby significantly extending the life span herein. Also, the life span of the relay switch 53, 54, 55, 56 is extended. So, the adjustments compared to the prior art solve several problems. Notably, the invention is also useful in supplying atomising modules with a DC current. In that case, an AC / DC converter can be placed between a transformer 60, 61 and a module 30, 31 connected thereto. The AC / DC converter will then preferably be part of the power supply circuit 50.

In a further embodiment, in the water reservoir, partitions 65 are positioned between the atomising modules 30, 31. The partitions are preferably arranged so that a fluid communication is maintained between the compartments formed. The possible conduction path between two adjacent modules 30, 31 is thereby longer than without partitions.

In this way any AC leakage current is prevented from flowing between the atomisers at high conductivity of the water.

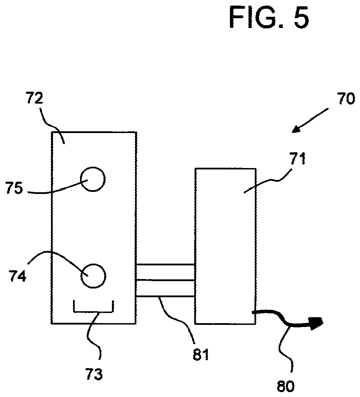

Figure 5 shows a schematical side view of an air humidifying device 70 according to an embodiment of the invention. The device 70 comprises a switching case 71 with the above mentioned power supply circuit 50. Next to the switching case 71 a humidification case 72, 73 is placed comprising a water reservoir, therein of which are some atomising modules not shown in Figure 5.

The humidification case 72 comprises an air inlet and an air outlet. With the use of a ventilator, the air is blown through the humidification case 72. The ventilator is not shown in Figure 5. The ventilator can possibly be arranged in the humidification case 72.

The device 70 desirably comprises a connecting cord 80 for connecting to the electric grid. From the switching case 71 runs an N number of wires 81 to 72, where N is the number of modules in the humidifying case 72. The temperature of the humidifying case 72 can be relatively low in comparison with the environmental temperature in specific applications, so that condensation can occur on the outside of the humidifying case 72. Since the switching case 71, in this embodiment, is physically separated from the humidifying case 72, the said condensation can not come in to the switching case 71.The temperature of the switching case 71 is equal or almost equal to the environmental temperature, which in most situations can not form condensation on the inside of the switching case 71.

It is evident that the above phrase "at the top side" refers to the top of the module and / or piezoelectric elements in use.

## Claims

1. Device (70) for humidifying air, comprising:
- a water reservoir (33) for filling water therein to a certain level;
- a number of atomising modules (30,31) for atomising part of the water in the water reservoir (33), whereby each atomising module is placed in the water reservoir (33), and comprises:
- a housing (2) with a substantially metal top wall (3) with a number of openings;
- a number of piezoelectric elements, each arranged in one of the openings of the top wall (3), **characterised in that** an outer part of the top side of the piezoelectric element makes an electrical contact with the top wall,
the device further comprising a power supply circuit (50) for supplying power to the atomising modules (30, 31), comprising a number of transformers (60, 61), wherein each atomising module (30, 31) is activated via a separate transformer (60, 61).

2. Device according to Claim 1, wherein an AC/DC converter is arranged between the piezoelectric elements of the atomising module and the respective transformer (60, 61).

3. Device according to Claim 2 wherein the AC/DC converter is arranged in an atomising module (30, 31).

4. Device according to one of the preceding claims, wherein the power supply circuit includes a number of switches for primary switching individual atomising modules.

5. Device according to Claim 4, wherein a switch is placed on both a supply and drain line to the transformer (60, 61).

6. Device according to one of the preceding claims, wherein the device comprises one or more partitions between atomising modules, placed in the water tank.

7. Method for humidifying air, comprising the steps of:
- the filling of a water reservoir (33) with water to a certain level;
- the placing of a number of atomising modules (30,31) in the water reservoir (33), for the atomisation of a part of the water, whereby each atomising module includes:
- a housing (2) with a substantially metal top wall (3) with a number of openings;
- a number of piezoelectric elements, each arranged in one of the openings of the top wall (3), whereby an outer part of the top side of the piezoelectric elements makes an electrical contact with the top wall,
- the linking of a power supply to each atomising module (30, 31) via a power supply circuit (50) where each atomising module is connected via a separate transformer (60, 61);
- the activation of the atomising modules (30, 31) so that a mist of water appears over each of the piezoelectric elements.

8. Method according to claim 7, wherein the method further comprises:
- the ventilation of air over the water reservoir.

## Patentansprüche

1. Vorrichtung (70) zum Befeuchten der Luft, umfassend:
- einen Wasserbehälter (33), um darin Wasser bis zu einem bestimmten Pegel einzufüllen;
- mehrere zerstäubende Module (30, 31) zum Zerstäuben eines Teils des Wassers im Wasserbehälter (33), wobei sich jedes zerstäubende Modul im Wasserbehälter (33) befindet und Folgendes umfasst:
- ein Gehäuse (2) mit einer im Wesentlichen aus Metall bestehenden oberen Wand (3) mit mehreren Öffnungen;
- mehrere piezoelektrische Elemente, die jeweils in einer der Öffnungen der oberen Wand (3) angeordnet und **dadurch gekennzeichnet sind, dass** ein äußerer Teil der Oberseite des piezoelektrischen Elements einen elektrischen Kontakt mit der oberen Wand herstellt,
die Vorrichtung umfasst des Weiteren einen Stromversorgungskreis (50) für die Stromversorgung der zerstäubenden Module (30, 31), der mehrere Transformatoren (60, 61) umfasst, wobei jedes zerstäubende Modul (30, 31) über einen separaten Transformator (60, 61) aktiviert wird.

2. Vorrichtung nach Anspruch 1, wobei ein AC/DC-Wandler zwischen den piezoelektrischen Elementen des zerstäubenden Moduls und dem entsprechenden Transformator (60, 61) angeordnet ist.

3. Vorrichtung nach Anspruch 2, wobei der AC/DC-Wandler in einem zerstäubenden Modul (30, 31) angeordnet ist.

4. Vorrichtung nach einem der vorangehenden Ansprüche, wobei der Stromversorgungskreis mehrere Schalter für das primäre Umschalten der einzelnen zerstäubenden Module enthält.

5. Vorrichtung nach Anspruch 4, wobei jeweils ein Schalter auf einer Zuleitung zum und auf einer Ablaufleitung vom Transformator (60, 61) angebracht ist.

6. Vorrichtung nach einem der vorangehenden Ansprüche, wobei die Vorrichtung eine oder mehrere Trennwände zwischen den zerstäubenden Modulen, die im Wassertank angebracht sind, umfasst.

7. Verfahren zum Befeuchten der Luft, umfassend die folgenden Schritte:
- Befüllen des Wasserbehälters (33) mit Wasser bis zu einem bestimmten Pegel;
- Anbringen mehrerer zerstäubender Module (30, 31) im Wasserbehälter (33) zum Zerstäuben eines Teils des Wassers, wobei jedes zerstäubende Modul Folgendes umfasst:
- ein Gehäuse (2) mit einer im Wesentlichen aus Metall bestehenden oberen Wand (3) mit mehreren Öffnungen;
- mehrere piezoelektrische Elemente, jeweils in einer der Öffnungen der oberen Wand (3) angeordnet, wodurch ein äußerer Teil der Oberseite des piezoelektrischen Elements einen elektrischen Kontakt mit der oberen Wand herstellt,
- Anschluss einer Stromversorgung an jedes zerstäubende Modul (30, 31) mittels eines Stromversorgungskreises (50), wobei jedes zerstäubende Modul über einen separaten Transformator (60, 61) angeschlossen wird;
- Aktivieren der zerstäubenden Module (30, 31), sodass ein Wassernebel über jedem der piezoelektrischen Elemente erscheint.

8. Verfahren nach Anspruch 7, wobei das Verfahren des Weiteren umfasst:
- Ventilation der Luft über dem Wasserbehälter.

## Revendications

1. Dispositif (70) pour humidifier l'air, comprenant:
- un réservoir d'eau (33) pour être rempli d'eau jusqu'à un certain niveau;
- un nombre de modules d'atomisation (30, 31) pour atomiser une partie de l'eau dans le réservoir d'eau (33), où chaque module d'atomisation est placé dans le réservoir d'eau (33), et comprend:
- un boîtier (2) ayant une paroi supérieure essentiellement métallique (3) avec un nombre d'ouvertures;
- un nombre d'éléments piézoélectriques, agencés chacun dans l'une des ouvertures de la paroi supérieure (3), **caractérisé en ce que**:
une partie externe du côté supérieur de l'élément piézoélectrique établit un contact électrique avec la paroi supérieure,
le dispositif comprenant en outre un circuit d'alimentation en énergie (50) pour alimenter les modules d'atomisation (30, 31) en énergie, comprenant un nombre de transformateurs (60, 61), dans lequel chaque module d'atomisation (30, 31) est activé par l'intermédiaire d'un transformateur séparé (60, 61).

2. Dispositif selon la revendication 1, dans lequel un convertisseur CA/CC est agencé entre les éléments piézoélectriques du module d'atomisation et le transformateur respectif (60, 61).

3. Dispositif selon la revendication 2, dans lequel le convertisseur CA/CC est agencé dans un module d'atomisation (30, 31).

4. Dispositif selon l'une des revendications précédentes, dans lequel le circuit d'alimentation en énergie comporte un nombre de commutateurs pour la commutation primaire de modules d'atomisation individuels.

5. Dispositif selon la revendication 4, dans lequel un commutateur est placé à la fois sur une conduite d'alimentation et une conduite de vidange sur le transformateur (60, 61).

6. Dispositif selon l'une des revendications précédentes, dans lequel le dispositif comprend une ou plusieurs cloison(s) entre des modules d'atomisation, placés dans le réservoir d'eau.

7. Procédé pour humidifier l'air, comprenant les étapes:
- de remplissage d'un réservoir d'eau (33) avec de l'eau jusqu'à un certain niveau;
- de mise en place d'un nombre de modules d'atomisation (30, 31) dans le réservoir d'eau (33) pour l'atomisation d'une partie de l'eau, chaque module d'atomisation comportant:
- un boîtier (2) ayant une paroi supérieure essentiellement métallique (3) avec un nombre d'ouvertures;
- un nombre d'éléments piézoélectriques, agencés chacun dans l'une des ouvertures de la paroi supérieure (3), moyennant quoi une partie externe du côté supérieur des éléments piézoélectriques établit un contact électrique avec la paroi supérieure,
- de liaison d'une alimentation en énergie à chaque module d'atomisation (30, 31) par l'intermédiaire d'un circuit d'alimentation en énergie (50) où chaque module d'atomisation est relié par l'intermédiaire d'un transformateur séparé (60, 61);
- d'activation des modules d'atomisation (30, 31) de sorte qu'un brouillard d'eau apparaisse sur chacun des éléments piézoélectriques.

8. Procédé selon la revendication 7, dans lequel le procédé comprend en outre:
- la ventilation de l'air sur le réservoir d'eau.
